# EUROPEAN PATENT SPECIFICATION

(11) **EP 0 635 383 B1**
(45) Date of publication and mention of the grant of the patent: **12.11.1997**
(21) Application number: 94305002.1
(22) Date of filing: 07.07.1994
(51) Int. Cl.: B60C 15/00, B60C 9/22

(54) **Pneumatic tire**
Luftreifen
Bandage pneumatique

(30) Priority: 19.07.1993 JP 178132/93
(43) Date of publication of application: 25.01.1995
(73) Proprietor: BRIDGESTONE CORPORATION, Tokyo 104 (JP)
(72) Inventor: Oka, Takeshi, Kodaira-shi, Tokyo (JP); Matsushita, Norinaga, Kodaira-shi, Tokyo (JP)
(74) Representative: Whalley, Kevin

(56) References cited:
- EP-A- 0 113 578
- EP-A- 0 479 065
- EP-A- 0 484 831
- EP-A- 0 549 311
- GB-A- 1 090 161
- US-A- 4 649 979
- PATENT ABSTRACTS OF JAPAN vol. 10, no. 159 (M-486) 2215 07 June 1986 & JP-A-61 012 405 (YOKOHAMA TIRE&RUBBER CO LTD.) 20 January 1986

## Description

The present invention relates to a pneumatic tire, and in particular to a pneumatic tire having a rigid sidewall portion and also having flexibility of the sidewall portion. More particularly, the invention relates to a pneumatic tire for two wheel vehicles. The pneumatic tire for use with two wheel vehicles (i. e. motorcycles) is usually characterised in that the tread width is greater than the maximum width of the sidewall of the tire.

The carcass of a pneumatic tire has an important role in maintaining tire shape. In general, carcass ply(ies) are turned up around bead cores from the inside to the outside and terminate at the sidewall area. The flexibility of the sidewall portion is adversely affected if edges of the carcass ply(ies) are located at the sidewall area, because there exists step-wise rigidity. In this case, the flexibility of the sidewall portion can be easily improved by reduction of the sidewall rubber thickness. However, if the sidewall rubber is very thin, repeated deformation under load will bring about stress concentration and consequently cracks at the sidewall, and finally edges of the carcass ply(ies) may be in danger of exposure outside the sidewall surface. Therefore, means other than reduction of the sidewall rubber thickness are required to improve the flexibility of the sidewall portion..

On the other hand, to maintain good and stable steering characteristics (manoeuvrability) at cornering, high rigidity of the sidewall is required. For this purpose, it is useful (a) to increase the thickness of the sidewall rubber, (b) to increase the number of the carcass plies, and (c) to overlap the carcass plies after turn-up.

Both (a) and (b) mentioned above are not preferable because (a) tends to adversely affect the flexibility of the tire sidewall portion and (b) considerably adversely affects the tire building efficiency and therefore productivity. There are some difficulties in the case of (c), namely if a tire is simply constructed with the carcass made of one carcass ply turned-up and overlapped, sufficient tire rigidity is not obtained.

An object of the present invention is to develop a pneumatic tire of the above type (c) having a carcass made of one or a small number of carcass plies which are turned up around bead cores from the inside to the outside and overlapped at the crown portion while eliminating or at least mitigating the above-mentioned difficulties and imparting flexibility to the sidewall portion.

Attention is also drawn to the disclosure of EP-A-0549311, which describes a motorcycle radial tire comprising a tread portion, a pair of axially spaced bead regions, a pair of sidewalls extending between tread edges and the bead regions, a bead core disposed in each bead region, a radial carcass comprising a ply of cords extending between the bead regions and turned up around the bead cores from the axially inside to the outside thereof to form two carcass ply turned up portions and a carcass ply main portion therebetween, and a belt disposed radially outside the carcass in the tread portion, wherein each of the two carcass ply turned up portions extend from each bead region into the tread portion to lie beyond the tire equator so that the edges thereof overlap each other to form an overlapped portion in the tread centre portion, the axial width of the overlapped portion being in the range of 0.2 to 0.6 times the tread width between the tread edges, the belt having a ply of at least one cord wound spirally at an angle of not more than 5 degrees with respect to the tire equator, and the axial width of the belt ply being in the range of 0.85 to 0.95 times the tread width.

The present invention in a first aspect provides a pneumatic tire having a carcass made of at least one carcass ply and at least one reinforcing layer located radially outwardly at the crown of the carcass, wherein
(a) the carcass ply(ies) are made of rubberized cords disposed at an angle in the range of 60° to 90° with respect to the tire equatorial plane;
(b) the carcass ply(ies) are turned up around bead cores and rubber fillers from the inside to the outside and overlapped at the crown; and
(c) the reinforcing layer(s) are made of rubberized cord(s) spirally wound around the crown of the ply(ies) and disposed substantially parallel with the tire equatorial plane;
   and characterized in that at least one auxiliary layer is located between the overlap portion of the carcass ply(ies) and the reinforcing layer(s), the auxiliary layer(s) being made of rubberized cords disposed at an angle in the range of 60° to 90° with respect to the tire equatorial plane.

In this specification, "to wind cord(s) spirally" means both (i) to wind 1 to 5 cord(s) spirally in the direction of tire section width and (ii) to wind spirally in the radial direction a rubberized-cord layer composed of more than 10 cords disposed parallel to each other.

More preferable features of the tire of the invention are as follows:
- the overlap width of the carcass ply(ies) is more than 1/2 of the tire tread width;
- the overlap width of the carcass ply(ies) is more than 20 mm;
- the carcass is made of two carcass plies turned-up and overlapped at the crown, and each outer ply edge covers each inner ply edge turned-up in the same direction so as to arrange the edges of the carcass plies step-wise;
- rubber fillers made of relatively thick and soft rubber are disposed between the carcass ply(ies) and between the upper portion of the bead core and below the sidewall height;
- rubber fillers made of relatively thin and soft rubber are disposed between the carcass ply(ies) and between the upper portion of the bead core and a little above the sidewall height;
- the surface of the rubber fillers are substantially wrapped by flippers and the radially outermost edges of the flippers are located at more than 1/2 of the sidewall height.

In this specification, the sidewall height means the distance measured parallel to the tire equatorial plane from the bead line to the tread edge.

The present invention in a second aspect provides a pneumatic tire having a carcass made of at least one carcass ply and at least one reinforcing layer located radially outwardly at the crown of the carcass, characterized in that
(a) the carcass ply(ies) are made of rubberized cords disposed at an angle in the range of 60° to 90° with respect to the tire equatorial plane;
(b) the carcass ply(ies) are turned up around bead cores and rubber fillers from the inside to the outside and overlapped at the crown;
(c) the reinforcing layer(s) are made of rubberized cord(s) spirally wound around the crown of the ply(ies) and disposed substantially parallel with the tire equatorial plane; and
(d) at least one down ply extends from the upper portion of one bead core to the upper portion of the other bead core.

The present invention in a third aspect provides a pneumatic tire having a carcass made of at least one carcass ply and a reinforcing layer made of two belt layers, characterized in that
(a) the carcass ply(ies) are made of rubberized cords disposed at an angle in the range of 60° to 90° with respect to the tire equatorial plane;
(b) the carcass ply(ies) are turned up around bead cores and rubber fillers from the inside to the outside and overlapped at the crown of the carcass;
(c) the belt layers are located around the overlapped portion of the carcass ply(ies); and
(d) the cords of the belt layers are disposed at an angle in the range of 10° to 30° with respect to the tire equatorial plane and intersect each other between the two belt layers.

The present invention in a fourth aspect provides a pneumatic tire having a carcass made of at least one carcass ply and a reinforcing layer made of at least one belt layer, characterized in that
(a) the carcass ply(ies) are made of rubberized cords disposed at an angle in the range of 25° to 45° with respect to the tire equatorial plane;
(b) the carcass ply(ies) are turned up around bead cores and rubber fillers from the inside to the outside and overlapped at the crown of the carcass;
(c) the belt layer(s) are located around the overlapped portion of the carcass ply(ies); and
(d) the cords of the belt layer(s) are disposed at an angle in the range of 15° to 35° with respect to the tire equatorial plane.

The invention will be further described, by way of example only, with reference to the accompanying drawings, in which:
Figure 1 is a perspective view of a pneumatic tire in accordance with the first aspect of the present invention, in which the outer rubber is partially peeled off so as to show the disposition of the cords;
Figure 2 is a cross section view of a pneumatic tire having a carcass made of two carcass plies in accordance with the first aspect of the invention;
Figure 3a is a cross section view of another pneumatic tire in accordance with the first aspect of the invention;
Figure 3b is a cross section view of a further pneumatic tire in accordance with the first aspect of the invention;
Figure 4 is a cross section view of a yet further pneumatic tire in accordance with the first aspect of the invention;
Figure 5 is a cross section view of a pneumatic tire in accordance with the second aspect of the present invention;
Figure 6 is a cross section view of a pneumatic tire in accordance with the third aspect of the invention; and
Figure 7 is a cross section view of a pneumatic tire in accordance with the fourth aspect of the invention.

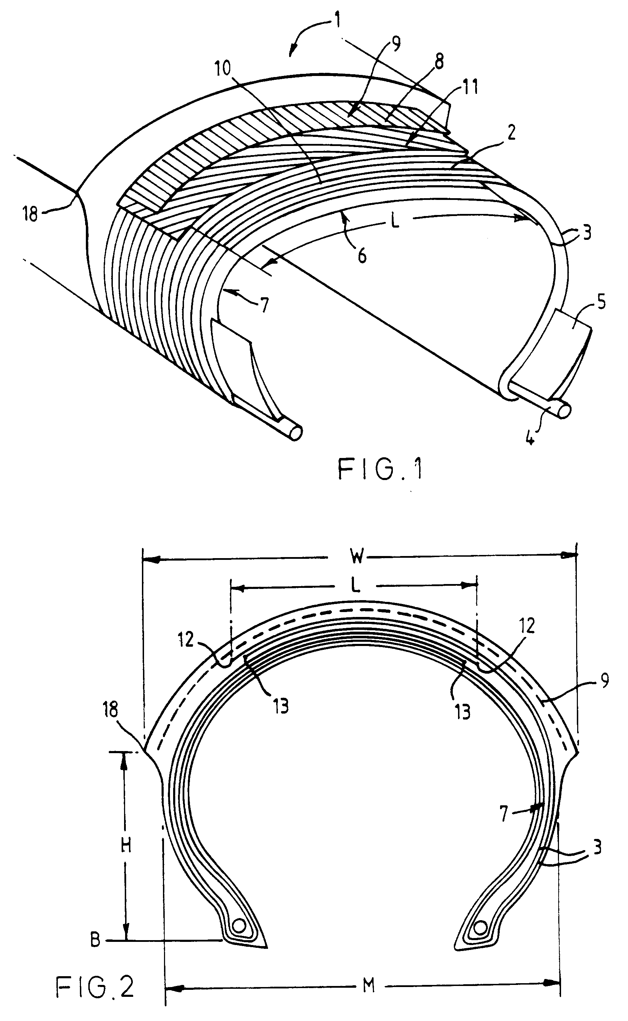

An example of a typical pneumatic tire in accordance with the first aspect of the invention is shown in Figure 1. Figure 1 is a perspective view of a pneumatic tire in which the outer rubber is shown partially peeled off so as to easily show the disposition of the cords. In Figure 1, reference numeral 1 indicates the pneumatic tire, numeral 2 is carcass ply cord, numeral 3 is a carcass ply, numeral 4 is a bead core, numeral 5 is a rubber filler, numeral 6 is the crown portion, numeral 7 is the carcass, numeral 8 is reinforcing layer cord, and numeral 9 is a reinforcing layer.

The pneumatic tire 1 of Figure 1 has a carcass 7 made of a carcass ply 3 and at least one reinforcing layer 9 located radially outwardly at the crown 6 of the carcass 7. The carcass ply 3 is made of rubberized cords 2 disposed at 90 with respect to the tire equatorial plane and is turned up around bead cores 4 and rubber fillers 5 from the inside to the outside and overlapped at the crown 6. The reinforcing layer 9 is made of rubberized cord(s) 8 spirally wound and disposed substantially parallel with the tire equatorial plane. The pneumatic tire 1 has an auxiliary layer 11 located between an overlap portion 10 of the carcass ply 3 and the reinforcing layer 9 and made of rubberized cords disposed at 75° with respect to the tire equatorial plane. The pneumatic tire 1 is provided with the auxiliary layer 11 for reinforcing the carcass 7. The cords of the auxiliary layer 11 are disposed at an angle in a range of 60° to 90° with respect to the tire equatorial plane. The auxiliary layer 11 makes it possible to prevent the overlap portion 10 of the carcass ply 3 from sliding off. Therefore, for minimizing the overlap width L of the carcass ply, the auxiliary layer 11 is provided. More specifically, the overlap width L may be more than 1/2 the tread width W of the tire, and said overlap width is preferably more than 20 mm.

In the case that high rigidity of the sidewall is required, the carcass 7 may be composed of two turned-up carcass plies 3 as shown in Figure 2. The carcass plies 3 are turned up around bead cores 4 and rubber fillers (not shown in Figure 2) from the inside to the outside and overlapped with each other at the crown. In this construction, in order to prevent separation, it is preferable that each outer ply edge 12 covers each inner ply edge 13 turned-up in the same direction so as to arrange the edges of the carcass plies step-wise. More specifically, it is preferable that the outer ply edge 12 is more than 5 mm distant from the inner ply edge 13.

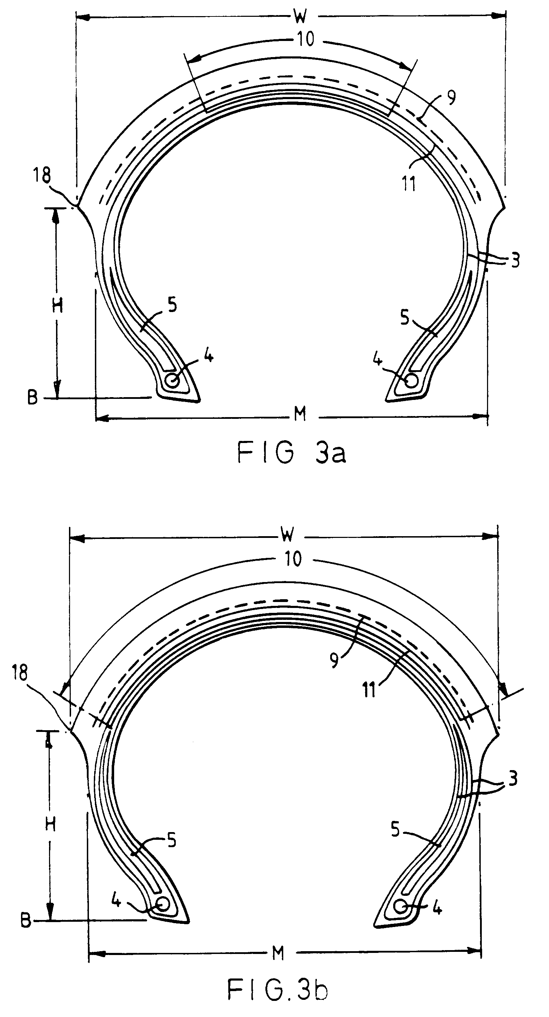

As shown in Figure 2 (and also in Figures 3 to 6), the sidewall height H is the distance measured parallel to the tire equatorial plane from the bead line B to the tread edge 18.

In the case that flexibility adjustment of the sidewall portion is required, it is preferable that rubber fillers 5 made of relatively thick and soft rubber are disposed between the carcass ply(ies) 3 and also between the upper portion of the bead core 4 and below the sidewall height H as shown in Figure 3a, or that rubber fillers 5 made of relatively thin and soft rubber are disposed between the carcass ply(ies) 3 and also between the upper portion of the bead core 4 and a little above the sidewall height H as shown in Figure 3b. It is preferable that the thickness of the rubber fillers 5 is more than 4 mm in case of Figure 3a and more than 2 mm in case of Figure 3b.

It is preferable that the hardness of the rubber fillers 5 is in the range of 50 - 60° which is softer than that of conventional rubber fillers (70 - 80°). The hardness of rubber is measured in accordance with the Shore A method. In the case that high rigidity of the sidewall is required, it is preferable to provide the sidewalls with flippers 14 which substantially wrap the surface of the rubber fillers 5, and the radially outermost edges 15 of the flippers 14 are located at a height of more than 1/2 of the sidewall height H as shown in Figure 4.

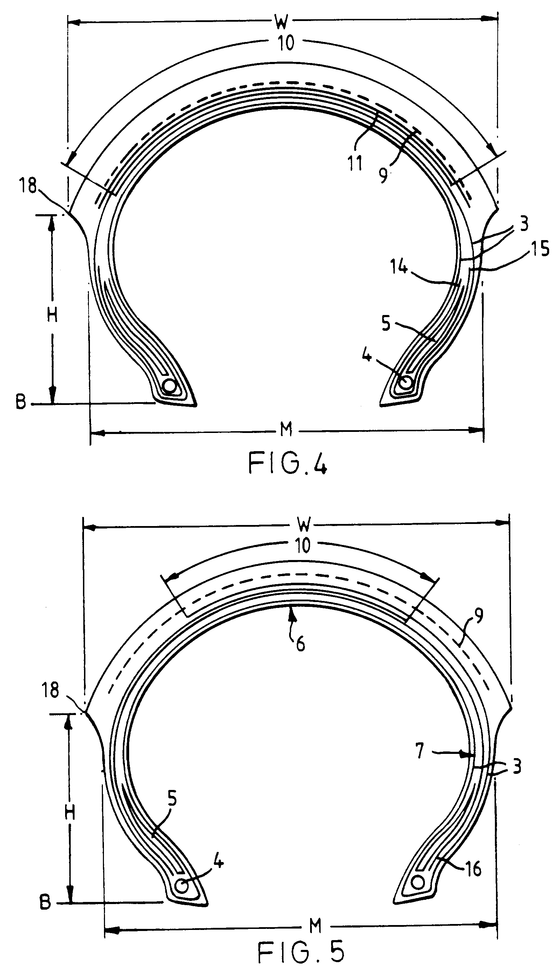

An example of a typical pneumatic tire in accordance with the second aspect of the present invention is shown in Figure 5. The pneumatic tire of Figure 5 has a carcass 7 made of a carcass ply 3 and at least one reinforcing layer 9 located radially outwardly at the crown 6 of the carcass 7. The carcass ply 3 is made of rubberized cords 2 disposed at an angle in the range of 60 to 90° with respect to the tire equatorial plane and is turned up around bead cores 4 and rubber fillers 5 from the inside to the outside and overlapped at the crown 6. The reinforcing layer 9 is made of rubberized cords spirally wound and disposed substantially parallel with the tire equatorial plane. The pneumatic tire has a down ply 16 extended from the upper portion of one bead core to the upper portion of the other bead core and located between the carcass ply. Since the down ply 16 is a reinforcing member of the tire sidewall to increase the rigidity of the sidewall portion, it is preferable that the down ply 16 is made of the same kind of rubberized cords as the carcass ply 3 forming the carcass 7, but this is not essential for the present invention.

An example of a typical pneumatic tire in accordance with the third aspect of the present invention is shown in Figure 6. The pneumatic tire of Figure 6 has a carcass 7 made of one or a small number of carcass plies 3 and a reinforcing layer 9 made of two belt layers 17. The carcass plies 3 are made of rubberized cords disposed at an angle in the range of 60° to 90° with respect to the tire equatorial plane and are turned up around bead cores 4 and rubber fillers 5 from the inside to the outside and overlapped with each other at the crown 6. The reinforcing layer 9 made of two belt layers 17 is located around the overlapped portion 10 of the carcass 7. The cords of the belt layers are disposed at an angle in the range of 10° to 30° with respect to the tire equatorial plane and intersect each other between the two belt layers. The reinforcing layer 9 is a hoop member for binding the overlap portion of the carcass plies 3 and a tread reinforcing member for increasing tire rigidity.

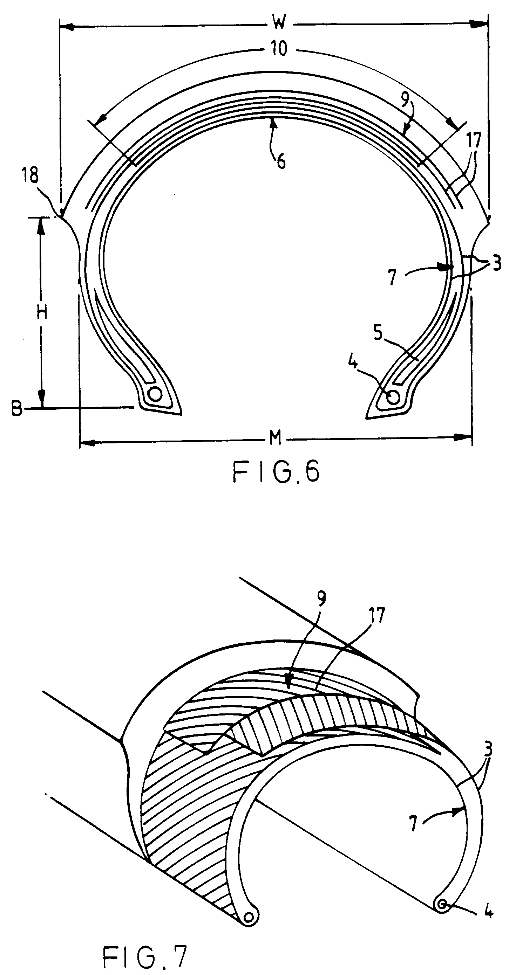

An example of a typical pneumatic tire in accordance with the fourth aspect of the present invention is shown in Figure 7. The pneumatic tire of Figure 7 has a carcass 7 made of one or a small number of carcass plies 3 and a reinforcing layer 9 made of one belt layer 17. The carcass plies 3 are made of rubberized cords disposed at an angle in the range of 25° to 45° with respect to the tire equatorial plane and are turned up around bead cores 4 and rubber fillers 5 (not shown in Figure 7) from the inside to the outside and overlapped with each other at the crown. The belt layer 17 is located around the overlapped portion of the carcass plies 3 and the cords of the belt layer 17 are disposed at an angle in the range of 15° to 35° with respect to the tire equatorial plane. It is preferable that the belt layer 17 is made of the same kind of rubberized cords as the carcass plies 3 or rubberized cords having higher modulus than the carcass plies 3.

In all the tires shown in Figures 1 to 7, which are intended for use with two wheel vehicles (i. e. motorcycles), the tread width W is greater than the maximum width M of the sidewall of the tire.

In accordance with the invention, since the carcass is made of at least one carcass ply 3 turned up around the bead cores 4 and rubber fillers 5 from the inside to the outside and overlapped at the crown 6, the rigidity of the sidewall is higher than that of a conventional tire having turn-up edges of one carcass ply in the sidewall area and nearly the same as that of a conventional tire having turn-up edges of two carcass plies in the sidewall area.
Moreover, in accordance with the invention, since the turn-up edges of the carcass ply(ies) are not located in the sidewall area, there exist no steps in the sidewall and therefore good flexibility of the sidewall is
obtained. To obtain sufficient rigidity of the tire, more than two carcass plies are necessary in a conventional tire, but one carcass ply will be sufficient in accordance with the present invention which results in a simple tire building process.
In a conventional tire having reinforcing layers made of rubberized cords crossing each other, since the radial expansion ratio between before and after tire curing is relatively high, the carcass ply 3 tends to slide off at an overlap portion. This tendency makes commercial production of such tires very difficult. In accordance with the present invention, since the tire has at least one reinforcing layer around the overlapped portion of the carcass 7 and the reinforcing layer is made of rubberized cords spirally wound and disposed substantially parallel with the tire equatorial plane, the above-mentioned expansion ratio is relatively low and sliding-off of the carcass ply at the overlap portion is restrained.

Since the tire has, in accordance with the present invention, an auxiliary layer 11 between the overlap portion 10 and the reinforcing layer 9, since sliding off of the carcass ply at the overlap portion is more restrained, it is possible to make the overlap width narrow. If the tire has, in accordance with the present invention, rubber filler 5 which is softer than that of conventional rubber fillers, the flexibility of the sidewall portion is adjustable.

Embodiments 1 to 4 of tires according to the first aspect of the present invention will be explained in more detail with reference to Figures 1 to 4 of the drawings respectively. All the embodiments are evaluated by mounting tires at the front wheel of 2-wheeled sports-type motor cycles.
The tire size of embodiment 1 is 160/60R17 and the pneumatic tire 1 has a carcass 7 made of a carcass ply 3 which is made of rubberized 1260d/2 nylon cords 2 disposed at 90° with respect to the tire equatorial plane and is turned up around bead cores 4 and rubber fillers 5 from the inside to the outside and overlapped at the crown 6. The rubber fillers 5 have 5 mm thickness and 70° hardness, the same as conventional rubber fillers, and are disposed between the upper portion of the bead cores 4 and 50 mm distant from there. The overlap width L of the carcass ply is 130 mm which is narrower than the tread width W of 160 mm. Each edge of the carcass ply 3 is located 15 mm inwardly distant from the tread edges 18. Nylon cords 2 of the carcass ply 3 are disposed parallel to each other at intervals of 60 cords per 50 mm. Surrounding the carcass 7 of the above-mentioned construction, the tire 1 has one auxiliary layer 11 comprising 1260d/2 nylon cords 2 disposed at 75° with respect to the tire equatorial plane and one reinforcing layer 9 comprising a single 1500d/2 Kevlar (aromatic polyamide) cord 8 spirally wound in the direction of tire section width and disposed at substantially 0° with respect to the tire equatorial plane. The auxiliary layer 11 is provided for the sake of increasing tire rigidity, the width of which is the same as the tread width W and nylon cords of which are disposed parallel to each other at intervals of 41 cords per 50 mm. Each edge of the reinforcing layer 9 is located 5 mm inwardly distant from the tread edges 18.

Embodiment 2 is a pneumatic tire as shown in Figure 2 and is the same as embodiment 1 except that the overlap portion is composed of two turned-up carcass plies and that each outer ply edge 12 is located 10 mm outwardly distant from each inner ply edge 13 turned-up in the same direction so as to arrange the edges of the carcass plies step-wise.

Embodiment 3 is a pneumatic tire as shown in Figure 3a and is the same as embodiment 1 except that soft rubber fillers 5 having hardness of 50° are disposed between the upper portion of the bead core 4 and 30 mm distant from the bead base line.

Embodiment 4 is a pneumatic tire as shown in Figure 4 and is the same as embodiment 1 except that the surface of the rubber fillers 5 are wrapped by flippers 14 and the radially outermost edges 15 of the flippers 14 are 40 mm distant from the bead base line B.

Embodiment 5 is a pneumatic tire according to the second aspect of the present invention as shown in Figure 5. The tire has a carcass 7 made of a carcass ply 3 and at least one reinforcing layer 9 located radially outwardly at the crown 6 of the carcass 7. The carcass ply 3 is made of rubberized nylon cords disposed at 75° with respect to the tire equatorial plane. The carcass ply 3 is turned up around bead cores 4 and rubber fillers 5 having a hardness of 70° from the inside to the outside and overlapped at the crown 6. The reinforcing layer 9 is made of rubberized cords spirally wound and disposed substantially parallel with the tire equatorial plane. The pneumatic tire has a down ply 16 extended from the upper portion of one bead core to the upper portion of the other bead core and located between carcass ply 3. The down ply 16 is made of the same rubberized cords layer as those of the carcass ply 3.

Embodiment 6 is a pneumatic tire according to the third aspect of the present invention as shown in Figure 6. The tire has a carcass 7 made of at least one carcass ply and a reinforcing layer 9 made of two belt layers 17. The carcass ply(ies) are made of rubberized nylon cords disposed at 75° with respect to the tire equatorial plane and turned up around bead cores 4 and rubber fillers 5 having a hardness of 70° from the inside to the outside and overlapped with each other at the crown 6. The cords of the belt layers 17 are disposed at ±15° with respect to the tire equatorial plane and intersect each other between the two belt layers. The belt layers 17 are made of Kevlar (aromatic polyamide) cord.

Embodiment 7 is a pneumatic tire according to the fourth aspect of the invention as shown in Figure 7. The tire has a carcass 7 made of at least one carcass ply 3 and a reinforcing layer 9 made of one belt layer 17. The carcass ply(ies) are made of rubberized nylon cords disposed at 30° with respect to the tire equatorial plane and turned up around bead cores 4 and rubber fillers 5 (not shown in Figure 7) having a hardness of 70° from the inside to the outside and overlapped with each other at the crown 6. The cords of the belt layer 17 are disposed at 20° with respect to the tire equatorial plane. The belt layer 17 is made of Kevlar (aromatic polyamide) cord.

Prior art 1 is a conventional pneumatic tire having two carcass plies. The edges of the carcass plies are located at the sidewall area. The tire has two belt layers.

Prior art 2 is a conventional pneumatic tire having a carcass ply. The edges of the carcass ply are located at the sidewall area. The tire has a belt layer.

Various kinds of tire performance of prior art tires 1 and 2 and embodiment tire 1 were evaluated and the results are shown in Table 1. The other embodiments were evaluated relatively.

**Table 1**

| | A | B | C | D |
|---|---|---|---|---|
| stable straight running | 6 | 7 | 8 | 7.5 |
| stable cornering | 7 | 6 | 8 | 7.5 |
| shimmy | 6 | 8 | 8 | 8 |
| grip | 9 | 8 | 9 | 9 |
| rigidity balance | 8 | 6 | 9 | 8.5 |
| steering (response) | 8 | 7 | 8 | 8 |
| steering (return) | 7 | 8 | 7 | 7 |
| shock absorbing | 7 | 8 | 7 | 7 |
| bounce astringency | 8 | 7 | 8 | 8 |
| A : prior art 1 B : prior art 2 C : embodiment 1 D : embodiment 8 | | | | |

Embodiment 8 is a pneumatic tire the same as embodiment 1 except that embodiment 8 has no auxiliary layer 11.

From the above Table 1, it is clear that the performance of embodiment tire 1 is superior to that of prior art tires 1 and 2, especially in view of cornering performance and rigidity balance which concern the rigidity of the sidewall portion. As the tire rigidity of embodiment 2 (Figure 2) is higher than that of embodiment 1, embodiment 2 is suitable to be used for large size two-wheel vehicles such as 1100cc tourers (touring motor cycles). If flexibility of the sidewall portion and strong rigidity of the sidewall portion are required, embodiment 3 (Figure 3a) is suitable. If flexibility of the sidewall portion and strong rigidity of the tire as a whole are required, a tire as shown in Figure 3b is suitable. As embodiment 4 has intermediate performance between embodiment 1 and embodiment 2, embodiment 4 is suitable for two-wheel vehicle tires of intermediate size between Figure 1 and Figure 2. Embodiment 5 (Figure 5) is suitably a tire having low aspect ratio (80, 90). Embodiment 6 (Figure 6) is suitable for a front tire. In embodiment 7 (Figure 7), since the numbers of reinforcing layers are reduced by half compared with prior art tire 1, it is possible to improve productivity of tire manufacturing.

In accordance with the invention, since the carcass is made of at least one carcass ply 3 turned up around bead cores 4 and rubber fillers 5 from the inside to the outside and overlapped at the crown 6, the rigidity of the sidewall is higher than that of a conventional tire having turn-up edges of one carcass ply in the sidewall area and nearly the same as that of a conventional tire having turn-up edges of two carcass plies in the sidewall area. Moreover, in accordance with the invention, since the turn-up edges of the carcass ply(ies) are not located in the sidewall area, there exist no steps in the sidewall and therefore good flexibility of the sidewall is obtained. To obtain sufficient rigidity of the tire, more than two carcass plies are necessary in a conventional tire, but one carcass ply will be sufficient in accordance with the present invention, which results in a simple tire building process and therefore improved productivity.

Also, in accordance with the present invention, since the tire has at least one reinforcing layer around the overlapped portion of the carcass 7 and the reinforcing layer is made of rubberized cord(s) spirally wound and disposed substantially parallel with the tire equatorial plane, the radial expansion ratio between before and after tire curing is very low and sliding-off of the carcass ply at the overlap portion is restrained. Consequently, commercial production of such tires becomes possible.

If the tire is, in accordance with the present invention, provided with rubber filler which is softer than conventional rubber filler, the rigidity and flexibility at the sidewall portion is well balanceable.

In conclusion, a tire in accordance with the invention has excellent stable steering performance as well as excellent balance of the other performances.

## Claims

1. A pneumatic tire having a carcass (7) made of at least one carcass ply (3) and at least one reinforcing layer (9) located radially outwardly at the crown (6) of the carcass, wherein
(a) the carcass ply(ies) (3) are made of rubberized cords disposed at an angle in the range of 60° to 90° with respect to the tire equatorial plane;
(b) the carcass ply(ies) (3) are turned up around bead cores (4) and rubber fillers (5) from the inside to the outside and overlapped at the crown (6); and
(c) the reinforcing layer(s) (9) are made of rubberized cord(s) (8) spirally wound around the crown of the ply(ies) and disposed substantially parallel with the tire equatorial plane;
and characterized in that at least one auxiliary layer (11) is located between the overlap portion (10) of the carcass ply(ies) (3) and the reinforcing layer(s) (9), the auxiliary layer(s) (11) being made of rubberized cords disposed at an angle in the range of 60° to 90° with respect to the tire equatorial plane.

2. A pneumatic tire as claimed in claim 1, characterized in that the overlap width (L) of the carcass ply(ies) (3) is more than 1/2 of the tire tread width (W).

3. A pneumatic tire as claimed in claim 1 or 2, characterized in that the overlap width (L) of the carcass ply(ies) (3) is more than 20 mm.

4. A pneumatic tire as claimed in any of claims 1 to 3, characterized in that two carcass plies (3) are turned-up and overlapped with each other at the crown (6); and each outer ply edge (12) covers each inner ply edge (13) turned up in the same direction so as to arrange the edges of the carcass plies step-wise.

5. A pneumatic tire as claimed in any of claims 1 to 4, characterized in that the rubber fillers (5) are made of relatively thick and soft rubber; and the rubber fillers (5) are disposed between the carcass ply(ies) (3) and between the upper portion of the bead core (4) and below the sidewall height (H).

6. A pneumatic tire as claimed in any of claims 1 to 4, characterized in that the rubber fillers (5) are made of relatively thin and soft rubber; and the rubber fillers (5) are disposed between the carcass ply(ies) (3) and between the upper portion of the bead core (4) and a little above the sidewall height (H).

7. A pneumatic tire as claimed in any of claims 1 to 6, characterized in that the surface of the rubber fillers (5) are substantially wrapped by flippers (14) and the radially outermost edges (15) of the flippers (14) are located at more than 1/2 of the sidewall height (H).

8. A pneumatic tire having a carcass (7) made of at least one carcass ply (3) and at least one reinforcing layer (9) located radially outwardly at the crown (6) of the carcass, characterized in that
(a) the carcass ply(ies) (3) are made of rubberized cords disposed at an angle in the range of 60° to 90° with respect to the tire equatorial plane;
(b) the carcass ply(ies) (3) are turned up around bead cores (4) and rubber fillers (5) from the inside to the outside and overlapped at the crown (6);
(c) the reinforcing layer(s) (9) are made of rubberized cord(s) (8) spirally wound around the crown of the ply(ies) and disposed substantially parallel with the tire equatorial plane; and
(d) at least one down ply (16) extends from the upper portion of one bead core to the upper portion of the other bead core.

9. A pneumatic tire having a carcass (7) made of at least one carcass ply (3) and a reinforcing layer (9) made of two belt layers (17), characterized in that
(a) the carcass ply(ies) (3) are made of rubberized cords disposed at an angle in the range of 60° to 90° with respect to the tire equatorial plane;
(b) the carcass ply(ies) (3) are turned up around bead cores (4) and rubber fillers (5) from the inside to the outside and overlapped at the crown (6) of the carcass;
(c) the belt layers (17) are located around the overlapped portion (10) of the carcass ply(ies); and
(d) the cords of the belt layers (17) are disposed at an angle in the range of 10° to 30° with respect to the tire equatorial plane and intersect each other between the two belt layers.

10. A pneumatic tire having a carcass (7) made of at least one carcass ply (3) and a reinforcing layer (9) made of at least one belt layer (17), characterized in that
(a) the carcass ply(ies) (3) are made of rubberized cords disposed at an angle in the range of 25° to 45° with respect to the tire equatorial plane;
(b) the carcass ply(ies) (3) are turned up around bead cores (4) and rubber fillers (5) from the inside to the outside and overlapped at the crown (6) of the carcass;
(c) the belt layer(s) (17) are located around the overlapped portion (10) of the carcass ply(ies); and
(d) the cords of the belt layer(s) (17) are disposed at an angle in the range of 15° to 35° with respect to the tire equatorial plane.

## Patentansprüche

1. Luftreifen, der eine Karkasse (7) hat, die aus mindestens einer Karkassenlage (3) besteht, und mindestens eine Verstärkungsschicht (9) hat, die bei der Krone (6) der Karkasse radial außen gelegen ist, wobei
(a) die Karkassenlagen (3) aus gummigetränkten Cordfäden bestehen, die unter einem Winkel von 60° bis 90° bezüglich der Äquatorebene des Reifens angeordnet sind;
(b) die Karkassenlagen (3) von der Innenseite nach der Außenseite um die Wulstkerne (4) und die Gummifüller (5) herum nach oben geschlungen sind, und bei der Krone (6) überlappt sind; und
(c) die Verstärkungsschichten (9) aus gummigetränkten Cordfäden (8) bestehen, die spiralförmig um die Krone der Lagen herum gewickelt sind und im wesentlichen parallel zu der Äquatorebene des Reifens angeordnet sind;
dadurch gekennzeichnet, daß mindestens eine Hilfsschicht (11) zwischen dem Überlappungsbereich (10) der Karkassenlagen (3) und den Verstärkungsschichten (9) gelegen ist, wobei die Hilfsschichten (11) aus gummigetränkten Cordfäden bestehen, die unter einem Winkel von 60° bis 90° bezüglich der Äquatorebene des Reifens angeordnet sind.

2. Luftreifen gemäß Anspruch 1, dadurch gekennzeichnet, daß die Überlappungsbreite (L) der Karkassenlage(n) (3) größer als die halbe Laufflächenbreite (W) des Reifens ist.

3. Luftreifen gemäß Anspruch 1 oder 2, dadurch gekennzeichnet, daß die Überlappungsbreite (L) der Karkassenlage(n) (3) größer als 20 mm ist.

4. Luftreifen gemäß irgendeinem der Ansprüche 1 bis 3, dadurch gekennzeichnet, daß zwei Karkassenlagen (3) nach oben herumgeschlungen sind, und bei der Krone (6) überlappt sind; und jeder äußere Lagenrand (12) jeden inneren Lagenrand (13), der in der gleichen Richtung nach oben herumgeschlungen ist, so bedeckt, daß die Ränder der Karkassenlage stufenweise angeordnet sind.

5. Luftreifen gemäß irgendeinem der Ansprüche 1 bis 4, dadurch gekennzeichnet, daß die Gummifüller (5) aus relativ dickem und weichem Gummi bestehen; und die Gummifüller (5) zwischen den Schichten der Karkassenlage(n) (3) und zwischen dem oberen Bereich des Wulstkerns (4) und einer unter der Seitenwandhöhe (H) liegenden Stelle angeordnet sind.

6. Luftreifen gemäß irgendeinem der Ansprüche 1 bis 4, dadurch gekennzeichnet, daß die Gummifüller (5) aus relativ dünnem und weichem Gummi bestehen; und die Gummifüller (5) zwischen den Schichten der Karkassenlage(n) (3) und zwischen dem oberen Bereich des Wulstkerns (4) und einer ein wenig über der Seitenwandhöhe (H) liegenden Stelle angeordnet sind.

7. Luftreifen gemäß irgendeinem der Ansprüche 1 bis 6, dadurch gekennzeichnet, daß die Oberfläche der Gummifüller (5) im wesentlichen von Wulstfahnen (14) eingehüllt ist, und die radial äußersten Ränder (15) der Wulstfahnen (14) über der halben Seitenwandhöhe (H) gelegen sind.

8. Luftreifen, der eine Karkasse (7) hat, die aus mindestens einer Karkassenlage (3) besteht, und mindestens eine Verstärkungsschicht (9) hat, die bei der Krone (6) der Karkasse radial außen gelegen ist, dadurch gekennzeichnet, daß
(a) die Karkassenlagen (3) aus gummigetränkten Cordfäden bestehen, die unter einem Winkel von 60° bis 90° bezüglich der Äquatorebene des Reifens angeordnet sind;
(b) die Karkassenlagen (3) von der Innenseite nach der Außenseite um die Wulstkerne (4) und die Gummifüller (5) herum nach oben geschlungen sind, und bei der Krone (6) überlappt sind;
(c) die Verstärkungsschichten (9) aus gummigetränkten Cordfäden (8) bestehen, die spiralförmig um die Krone der Lagen herum gewickelt sind, und im wesentlichen parallel zu der Äquatorebene des Reifens angeordnet sind; und
(d) mindestens eine nach unten verlaufende Lage (16) sich von dem oberen Bereich eines Wulstkerns bis zu dem oberen Bereich des anderen Wulstkerns erstreckt.

9. Luftreifen, der eine Karkasse (7) hat, die aus mindestens einer Karkassenlage (3) besteht, und eine Verstärkungsschicht (9) hat, die aus zwei Gürtelschichten (17) besteht, dadurch gekennzeichnet, daß
(a) die Karkassenlagen (3) aus gummigetränkten Cordfäden bestehen, die unter einem Winkel von 60° bis 90° bezüglich der Äquatorebene des Reifens angeordnet sind;
(b) die Karkassenlagen (3) von der Innenseite nach der Außenseite um die Wulstkerne (4) und die Gummifüller (5) herum nach oben geschlungen sind, und bei der Krone (6) der Karkasse überlappt sind;
(c) die Gürtelschichten (17) um den überlappten Bereich (10) der Karkassenlagen herum angeordnet sind; und
(d) die Cordfäden der Gürtelschichten (17) unter einem Winkel von 10° bis 30° bezüglich der Äquatorebene des Reifens angeordnet sind und sich zwischen den zwei Gürtelschichten überkreuzen.

10. Luftreifen, der eine Karkasse (7) hat, die aus mindestens einer Karkassenlage (3) besteht, und eine Verstärkungsschicht (9) hat, die aus mindestens einer Gürtelschicht (17) besteht, dadurch gekennzeichnet, daß
(a) die Karkassenlagen (3) aus gummigetränkten Cordfäden bestehen, die unter einem Winkel von 25° bis 45° bezüglich der Äquatorebene des Reifens angeordnet sind;
(b) die Karkassenlagen (3) von der Innenseite nach der Außenseite um die Wulstkerne (4) und die Gummifüller (5) herum nach oben geschlungen sind, und bei der Krone (6) der Karkasse überlappt sind;
(c) die Gürtel schichten (17) um den überlappten Bereich (10) der Karkassenlagen herum angeordnet sind; und
(d) die Cordfäden der Gürtelschichten (17) unter einem Winkel von 15° bis 35° bezüglich der Äquatorebene des Reifens angeordnet sind.

## Revendications

1. Bandage pneumatique comportant une carcasse (7), composée d'au moins une nappe de carcasse (3) et d'au moins une couche de renforcement (9) agencée radialement vers l'extérieur au niveau du sommet (6) de la carcasse, dans lequel
(a) la (les) nappe(s) de carcasse (3) est (sont) composée(s) de câblés caoutchoutés agencés de sorte à former un angle de 60° à 90° par rapport au plan équatorial du pneumatique;
(b) la (les) nappe(s) de carcasse (3) est (sont) retournée(s) autour de tringles (4) et de bourrages en caoutchouc (5), de l'intérieur vers l'extérieur, avec un chevauchement au niveau du sommet (6); et
(c) la (les) couche(s) de renforcement (9) est (sont) composée(s) d'un (de) câblé(s) caoutchouté(s) enroulé(s) en spirale autour du sommet de la (des) nappe(s) et agencé(s) de façon pratiquement parallèle au plan équatorial du pneumatique;
et caractérisé en ce que au moins une couche auxiliaire (11) est agencée entre la partie à chevauchement (10) de la (des) nappe(s) de carcasse (3) et de la (des) couche(s) de renforcement (9), la (les) couche(s) auxiliaire(s) (11) étant composée(s) de câblés caoutchoutés agencés de sorte à former un angle de 60° à 90° par rapport au plan équatorial du pneumatique.

2. Bandage pneumatique selon la revendication 1, caractérisé en ce que la largeur de chevauchement (L) de la (des) nappe(s) de carcasse (3) représente plus de la moitié de la largeur de la bande de roulement du pneumatique (W).

3. Bandage pneumatique selon les revendications 1 ou 2, caractérisé en ce que la largeur de chevauchement (L) de la (des) nappe(s) de carcasse (3) est supérieure à 20 mm.

4. Bandage pneumatique selon l'une quelconque des revendications 1 à 3, caractérisé en ce que deux nappes de carcasse (3) sont retournées et se chevauchent au niveau du sommet (6); chaque bord de la nappe externe (12) recouvrant chaque bord de la nappe interne (13), retournée dans la même direction, de sorte à agencer les bords des nappes de carcasse en gradins.

5. Bandage pneumatique selon l'une quelconque des revendications 1 à 4, caractérisé en ce que les bourrages en caoutchouc (5) sont composés de caoutchouc relativement épais et mou; les bourrages en caoutchouc (5) étant agencés entre la (les) nappe(s) de carcasse (3) et entre la partie supérieure de la tringle (4) et au-dessous de la hauteur de flanc (H).

6. Bandage pneumatique selon l'une quelconque des revendications 1 à 4, caractérisé en ce que les bourrages en caoutchouc (5) sont composés de caoutchouc relativement fin et mou; les bourrages en caoutchouc (5) étant agencés entre la (les) nappe(s) de carcasse (3) et entre la partie supérieure de la tringle (4) et un peu au-dessous de la hauteur de flanc (H).

7. Bandage pneumatique selon l'une quelconque des revendications 1 à 6, caractérisé en ce que la surface des bourrages en caoutchouc (5) est pratiquement enveloppée par des bandelettes (14), les bords radialement les plus externes (15) des bandelettes (14) étant agencés au niveau d'un point correspondant à plus de la moitié de la hauteur du flanc (H).

8. Bandage pneumatique comportant une carcasse (7) composée d'au moins une nappe de carcasse (3) et d'au moins une couche de renforcement (9) agencée radialement vers l'extérieur au niveau du sommet (6) de la carcasse, caractérisé en ce que:
(a) la (les) nappe(s) de carcasse (3) est (sont) composée(s) de câblés caoutchoutés agencés de sorte à former un angle de 60° à 90° par rapport au plan équatorial du pneumatique;
(b) la (les) nappe(s) de carcasse (3) est (sont) retournée(s) autour de tringles (4) et de bourrages en caoutchouc (5), de l'intérieur vers l'extérieur avec un chevauchement au niveau du sommet (6);
(c) la (les) couche(s) de renforcement (9) est (sont) composée(s) d'un (de) câblé(s) (8), enroulé(s) en spirale autour du sommet de la (des) nappe(s) et agencé(s) de façon pratiquement parallèle au plan équatorial du pneumatique; et
(d) au moins une nappe descendante (16) s'étend de la partie supérieure d'une tringle vers la partie supérieure de l'autre tringle.

9. Bandage pneumatique comportant une carcasse (7) composée d'au moins une nappe de carcasse (3) et d'une couche de renforcement (9) composée de deux couches de ceinture (17), caractérisé en ce que
(a) la (les) nappe(s) de carcasse (3) est (sont) composée(s) de câblés caoutchoutés agencés de sorte à former un angle de 60° à 90° par rapport au plan équatorial du pneumatique;
(b) la (les) nappe(s) de carcasse (3) est (sont) retournée(s) autour de tringles (4) et de bourrages en caoutchouc (5), de l'intérieur vers l'extérieur, avec un chevauchement au niveau du sommet (6) de la carcasse;
(c) les couches de ceinture (17) sont agencées autour de la partie à chevauchement (10) de la (des) nappe(s) de carcasse; et
(d) les câblés des couches de ceinture (17) sont agencés de sorte à former un angle de 10° à 30° par rapport au plan équatorial du pneumatique et se coupent entre les deux couches de ceinture.

10. Bandage pneumatique comportant une carcasse (7) composée d'au moins une nappe de carcasse (3) et d'une couche de renforcement (9) composée d'au moins une couche de ceinture (17), caractérisé en ce que
(a) la (les) nappe(s) de carcasse est (sont) composée(s) de câblés caoutchoutés agencés de sorte à former un angle de 25° à 45° par rapport au plan équatorial du pneumatique;
(b) la (le) nappe(s) de carcasse (3) est (sont) retournée(s) autour de tringles (4) et de bourrages en caoutchouc (5), de l'intérieur vers l'extérieur, avec un chevauchement au niveau du sommet (6) de la carcasse;
(c) la (les) couche(s) de ceinture (17) est (sont) agencée(s) autour de la partie à chevauchement (10) de la (des) nappe(s) de carcasse; et
(d) les câblés de la (des) couche(s) de ceinture (17) sont agencés de sorte à former un angle de 15° à 35° par rapport au plan équatorial du pneumatique.
